# EUROPÄISCHE PATENTSCHRIFT

(11) **EP 3 582 874 B1**
(45) Veröffentlichungstag und Bekanntmachung des Hinweises auf die Patenterteilung: **22.09.2021**
(21) Anmeldenummer: 18721261.8
(22) Anmeldetag: 10.02.2018
(51) Int. Cl.: B01D 45/08

(54) **TROPFENABSCHEIDER MIT STECKVERBINDUNGEN**
DROPLET SEPARATOR HAVING PLUG CONNECTIONS
SÉPARATEUR DE GOUTTES COMPRENANT DES LIAISONS PAR ENFICHAGE

(30) Priorität: 14.02.2017 DE 102017001414
(43) Veröffentlichungstag der Anmeldung: 25.12.2019
(73) Patentinhaber: Munters Euroform GmbH, 52068 Aachen (DE)
(72) Erfinder: GRIEPENTROG, Wieland, 4721 Kelmis (BE); SHAHNAZIAN, Hamid, 45239 Essen (DE); WANDRES, Peter, 52066 Aachen (DE); SCHMITZ, Jürgen, 52070 Aachen (DE); SCHIEREN, Willi, 52072 Aachen (DE)
(74) Vertreter: Hauck Patentanwaltspartnerschaft mbB
(86) Internationale Anmeldenummer: PCT/DE2018/000029
(87) Internationale Veröffentlichungsnummer: WO 2018/149433

(56) Entgegenhaltungen:
- WO-A1-2005/107921
- DE-A1- 19 501 282
- DE-A1-102006 011 152
- DE-U1-202011 106 925

## Beschreibung

Die vorliegende Erfindung betrifft einen Tropfenabscheider für einen vertikalen Strömungskanal, insbesondere einer Rauchgasentschwefelungsanlage, mit einer Tropfenabscheiderlage mit einer Vielzahl von parallel zueinander angeordneten Lamellentropfenabscheiderprofilen, die mit hierzu quer verlaufenden Endwänden versehen sind, und einer Tragkonstruktion für die Tropfenabscheiderlage zur Lagerung an den Rändern oder Trägereinrichtungen des Strömungskanals.

Derartige Tropfenabscheider sind bekannt. Sie sind für Strömungskanäle ausgebildet, um aus einem vertikal von unten nach oben gerichteten Gasstrom Flüssigkeitspartikel abzuscheiden. Die Tropfenabscheiderlagen sind bei derartigen Tropfenabscheidern als horizontale Lage, als durchgehend einseitig geneigte Lage, als dachförmig oder V-förmig ausgebildete Lage konzipiert. Derartige Tropfenabscheider sind aus einer Vielzahl von Veröffentlichungen bekannt.

Die Tropfenabscheider weisen eine Tragkonstruktion auf, bei der die jeweilige Tropfenabscheiderlage an den Rändern des Strömungskanals bzw. an entsprechenden Trägerkonstruktionen desselben gelagert ist. Diese Tragkonstruktion kann beispielsweise zwei seitliche Stützkonstruktionen umfassen, mit denen zwei nacheinander angeordnete dachförmige Tropfenabscheiderlagen an entsprechenden Trägern eines Strömungskanals gelagert sind. Ein entsprechend ausgebildeter Tropfenabscheider ist aus der DE 20 2007 001 942 U1 bekannt.

Die Verbindung der jeweiligen Tropfenabscheiderlage mit der zugehörigen Tragkonstruktion erfolgt dabei in herkömmlicher Weise durch Verschweißen (Handschweißen, Ultraschallschweißen, Spiegelschweißen) oder Verschrauben. Auch ist es bereits bekannt, derartige seitliche Stützkonstruktionen mit rinnenförmigen Halterungen zu versehen, in denen die Endwände von dachförmig oder V-förmig ausgebildeten Tropfenabscheiderlagen verschiebbar gelagert sind. Auch hierbei kann eine Fixierung der Endwände durch Verschweißen, Verschrauben etc. vorgenommen werden.

Ein weiterer Tropfenabscheider ist aus der DE 10 2006 011 152 A1 bekannt. Hierbei ist die jeweilige Tropfenabscheiderlage in Taschen eingehängt, die an Halteplatten der randseitigen Tragkonstruktionen angebracht sind. Die Lagerung kann auch hier verschiebbar oder fest erfolgen.

Der vorliegenden Erfindung liegt die Aufgabe zugrunde, einen Tropfenabscheider der angegebenen Art zur Verfügung zu stellen, der sich besonders einfach und rasch montieren und demontieren lässt.

Diese Aufgabe wird erfindungsgemäß durch einen Tropfenabscheider mit den Merkmalen von Patentanspruch 1 gelöst.

Die erfindungsgemäße Lösung geht von einem anderen Ansatz aus als beim Stand der Technik. Während der Stand der Technik entweder eine feste Verbindung durch Schweißen, Löten, Schrauben zwischen der Tragkonstruktion und der Tropfenabscheiderlage vorsieht oder eine verschiebbare Lagerung zwischen beiden Systemen offenbart, geht die Erfindung einen Weg, der eine Montage der Tropfenabscheiderlage an der Tragkonstruktion vor Ort ohne besondere Fachkenntnisse ermöglicht, wobei diese Montage vorzugsweise ohne weitere Hilfsmittel, d.h. spezielle Montagewerkzeuge, stattfindet. Entsprechendes gilt für die Demontage der Tropfenabscheiderlage von der Tragkonstruktion.

Bei den erfindungsgemäß vorgeschlagenen Steckverbindungen wird ein vorstehender Abschnitt eines Bauteiles in einen zurückspringenden Abschnitt bzw. eine entsprechende Öffnung eines anderen Bauteiles gesteckt und damit über einen wieder lösbaren Klemmeingriff verbunden. Ggf. findet dabei eine zusätzliche Verrastung bzw. Verriegelung, beispielsweise über eine zusätzliche Parallelbewegung der Bauteile zueinander, statt. Zur Montage erfolgt daher anfangs ein Bewegen der Bauteile gegeneinander, um einen entsprechenden Einsteckvorgang des vorstehenden Abschnittes zu bewirken. Wenn hierdurch bereits der gewünschte Klemmeingriff erreicht wird, kann der Steckvorgang beendet sein. Anderenfalls kann die vorstehend geschilderte weitere Parallelbewegung erfolgen, um eine Verrastung bzw. Verriegelung zu erreichen. In diesem Fall sind die vorstehenden Abschnitte vorzugsweise hakenförmig ausgebildet und können dann beispielsweise eine Öffnung im anderen Bauteil hintergreifen.

Dieser Steckvorgang kann vorzugsweise manuell erfolgen, ohne hierfür spezielles Montagewerkzeug zu benötigen.

Um das Zusammenstecken zwischen Tropfenabscheiderlage und Tragkonstruktion zu ermöglichen, sind die entsprechenden Teile vorzugsweise in Form einer Leichtbaukonstruktion ausgebildet. Beispielsweise können dabei Tragkonstruktion und Tropfenabscheiderlage aus geeigneten Kunststoffen gefertigt sein.

Die Endwände der Tropfenabscheiderlage sind durch Steckverbindungen mit Halteplatten der Tragkonstruktion verbunden, wobei sich diese Halteplatten an den Rändern des Strömungskanals (oder geeigneten Trägerkonstruktionen) oder an einem geeigneten Tragstab der Tragkonstruktion abstützen. Die Verbindung der Endwände der Tropfenabscheiderlage mit den Halteplatten erfolgt dabei durch Aufstecken der Endwände auf den oberen Randbereich der Halteplatten, so dass hier keine speziellen Befestigungseinrichtungen an den Innenseiten der Halteplatten vorgesehen sein müssen.

Zur zusätzlichen Abstützung besitzt die Tropfenabscheiderlage parallel zu den Endwänden verlaufende Zwischenwände, die dann ebenfalls über Steckverbindungen mit der Tragkonstruktion verbunden sind. Hierbei finden weitere Halteplatten der Tragkonstruktion Verwendung, auf die die Zwischenwände gesteckt sind. Diese Halteplatten können sich dann beispielsweise wiederum auf einem geeigneten Tragstab der Tragkonstruktion abstützen.

Auch kann eine solche Tragkonstruktion so ausgebildet sein, dass sie mit den Endwänden und Zwischenwänden verbundene bzw. verbindbare Halteplatten und hiermit über Steckverbindungen verbundene Stegplatten umfasst. Diese Stegplatten verlaufen dann vorzugsweise senkrecht zu den Halteplatten und sind an diesen über Steckverbindungen fixiert. Auf diese Weise ergibt sich eine ausreichend versteifte Tragkonstruktion.

Auch sieht die Erfindung einen Tropfenabscheider vor, der mehrere nacheinander in Strömungsrichtung bzw. übereinander angeordnete Tropfenabscheiderlagen aufweist. Hierbei kann jeder Tropfenabscheiderlage eine eigene Tragkonstruktion zugeordnet sein, die die vorstehend beschriebenen Steckverbindungsmerkmale aufweist. Bevorzugt wird aber eine Ausführungsform, bei der die mehreren Tropfenabscheiderlagen eine gemeinsame Tragkonstruktion aufweisen, wobei mindestens eine Tropfenabscheiderlage über Steckverbindungen mit der Tragkonstruktion verbunden ist.

Speziell kann hierbei die gemeinsame Tragkonstruktion mit einer oberen Tropfenabscheiderlage durch Steckverbindungen verbunden sein, während sie mit einer unteren Tropfenabscheiderlage verschraubt ist, um hierdurch zusätzliche Sicherheit zu erreichen.

Die Erfindung wird nachfolgend anhand eines Ausführungsbeispieles in Verbindung mit der Zeichnung im Einzelnen erläutert. Es zeigen:
- Figur 1: eine schematische räumliche Ansicht eines zweistufigen Tropfenabscheiders;
- Figur 2: die Tragkonstruktion für den Tropfenabscheider der Figur 1, aufgelöst in Einzelteile;
- Figur 3: den Tropfenabscheider der Figuren 1 und 2 im auseinandergezogenen Zustand; und
- Figur 4: eine räumliche Ansicht des zweistufigen Tropfenabscheiders mit entsprechenden Bedüsungsrohren.

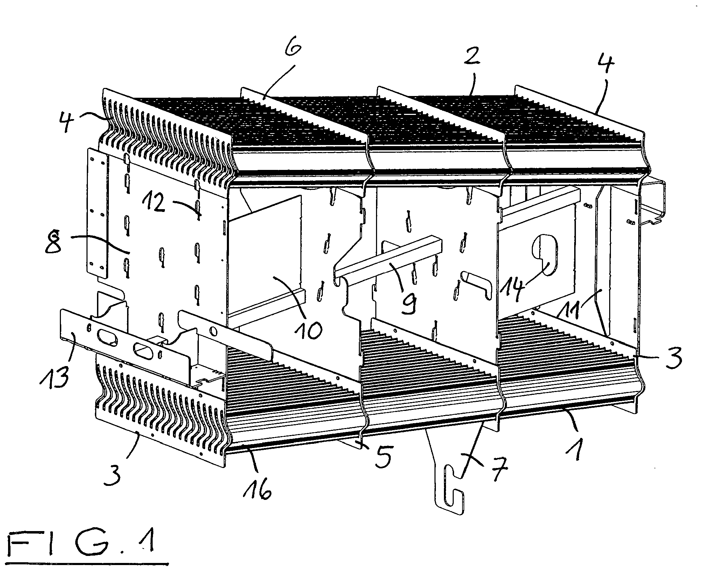

Der in den Figuren 1-4 dargestellte Tropfenabscheider ist zweistufig ausgebildet und für den Einbau in einen vertikalen Strömungskanal einer Rauchgasentschwefelungsanlage ausgebildet. Der Tropfenabscheider besitzt eine untere Tropfenabscheiderlage 1 und eine obere Tropfenabscheiderlage 2, die als Grobabscheider und Feinabscheider ausgebildet sind und jeweils aus einer Vielzahl von nebeneinander angeordneten Lamellenprofilen bestehen. Diese Lamellenprofile sind bekannt und müssen daher im Einzelnen nicht beschrieben werden. Die einzelnen Lamellenprofile 16 sind mit Endwänden 3, 4, die sich quer zu den Lamellenprofilen 16 erstrecken, verschweißt und erstrecken sich durch die Schlitze von zwei Zwischenwänden 5, 6.

Bei der hier dargestellten Ausführungsform ist die untere Tropfenabscheiderlage 1 mit einem Neigungswinkel von 10° angeordnet, während die obere Tropfenabscheiderlage 2 einen Neigungswinkel von 15° zur Horizontalen besitzt.

Für die Lagerung des Tropfenabscheiders an Trägereinrichtungen des Strömungskanals, beispielsweise an dessen Seitenwänden, findet eine spezielle Tragkonstruktion Verwendung. Hauptelement dieser Tragkonstruktion ist ein Tragstab 9, der die entsprechenden Last der oberen und unteren Tropfenabscheiderlage 1, 2 auf die seitlichen Trägereinrichtungen des Strömungskanals abträgt. Dieser Tragstab 9 erstreckt sich durch insgesamt vier Halteplatten 8, die sich quer zum Tragstab 9 erstrecken und etwa in vertikaler Verlängerung der Endwände 3, 4 und Zwischenwände 5, 6 der Abscheiderlagen 1, 2 angeordnet sind. Die Halteplatten 8 besitzen jeweils eine etwa zentrale Öffnung, durch die sich der Tragstab 9 erstreckt, so dass sich die obere Tropfenabscheiderlage 2 über den oberen Bereich der Halteplatten 8 auf dem Tragstab 9 abstützen kann, während die andere Tropfenabscheiderlage 1 über den unteren Bereich der Halteplatten 8 am Tragstab 9 aufgehängt ist. Die Endwände 3 und Zwischenwände 5 der unteren Tropfenabscheiderlage 1 sind in ihrem oberen Randbereich mit den Halteplatten 8 verschraubt. Die Endwände 4 und Zwischenwände 6 der oberen Tropfenabscheiderlage 2 sind mit ihren unteren Randbereichen über geeignete Steckverbindungen mit den Halteplatten 8 verbunden.

Zur Versteifung dieser Tragkonstruktion sind Stegplatten 10 über und unter dem Tragstab 9 angeordnet, die sich jeweils zwischen zwei Halteplatten erstrecken und diese miteinander verbinden. Auch dies erfolgt mittels geeigneter Steckverbindungen. Des Weiteren weisen die Halteplatten 8 Versteifungsstege 11 auf, die durch Steckverbindungen an den Halteplatten befestigt sind.

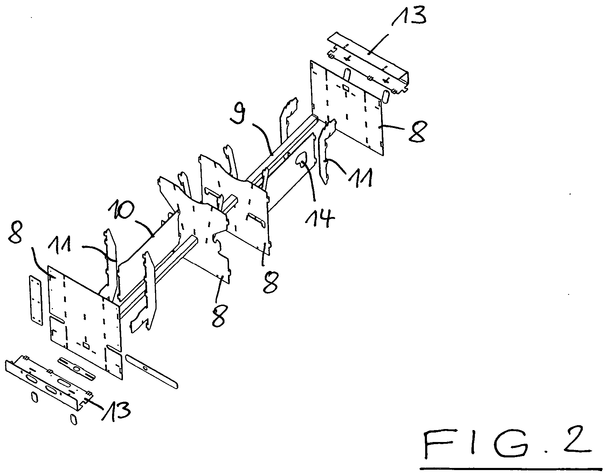

Der entsprechende Aufbau dieser Tragkonstruktion ist des Weiteren in Figur 2 mit Einzeldarstellung der jeweiligen Elemente gezeigt.

Der Tragstab 9, der sich durch die vier Halteplatten erstreckt, liegt an seinen Enden auf einem Flansch 13 der Halteplatten 8 auf, der sich nach außen erstreckt und auf der Trägereinrichtung des Strömungskanals zu liegen kommt.

In Figur 1 ist gezeigt, dass eine Zwischenwand 5 einen sich nach unten erstreckenden Abschnitt 7 aufweist, der mit einer geeigneten Ausnehmung zur Aufnahme eines Bedüsungsrohres zur Reinigung des Abscheiders versehen ist. Derartige Bedüsungsrohre können sich auch durch geeignete Löcher der Stegplatten 10 erstrecken, wie beispielsweise bei 14 gezeigt.

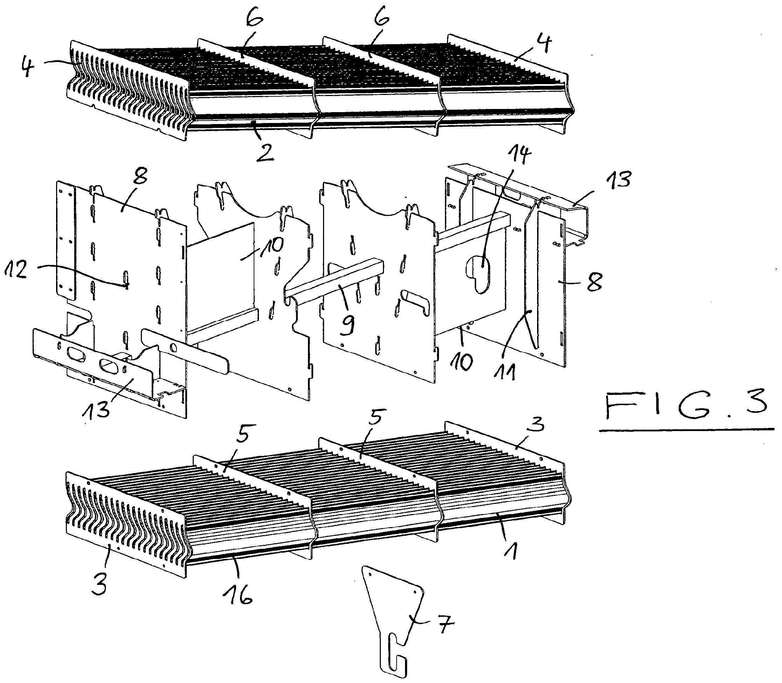

Figur 3 zeigt den Abscheider der Figuren 1 und 2 im auseinandergezogenen Zustand der beiden Abscheiderlagen 1, 2 und der dazwischen angeordneten Tragkonstruktion. Lediglich die Endwände 3 und Zwischenwände 5 der unteren Abscheiderlage 1 sind mit den Halteplatten 8 der Tragkonstruktion verschraubt, während es sich bei allen anderen Verbindungen um Steckverbindungen handelt. Bei diesen Steckverbindungen besitzt das eine Element einen Haken, der durch eine Öffnung im anderen Element geführt ist. Beispielsweise besitzt die Stegplatte 10 stirnseitig einen solchen Haken 12, der durch einen Schlitz in der zugehörigen Halteplatte 8 geführt ist. Durch Abwärtsbewegung der Stegplatte 10 wird dann eine Verrastung der beiden Elemente miteinander erzielt. Bei der Demontage wird die Stegplatte 10 angehoben, wonach der Haken 12 aus der Schlitzöffnung entfernt werden kann.

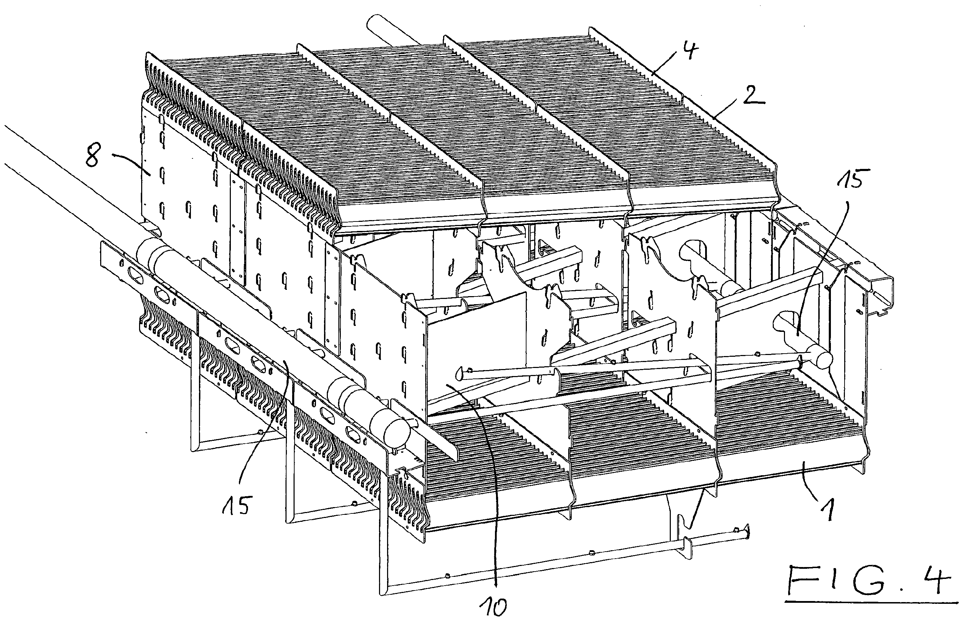

Figur 4 zeigt eine Gesamtansicht des zweistufigen Abscheiders mit Tragkonstruktion, wobei hier einige Bedüsungsrohre 15 im Detail dargestellt sind.

## Patentansprüche

1. Tropfenabscheider für einen vertikalen Strömungskanal, insbesondere einer Rauchgasentschwefelungsanlage, mit einer Tropfenabscheiderlage (1, 2) mit einer Vielzahl von parallel zueinander angeordneten Lamellentropfenabscheiderprofilen, die mit hierzu quer verlaufenden Endwänden (3, 4) versehen sind, und einer Tragkonstruktion für die Tropfenabscheiderlage zur Lagerung an den Rändern oder Trägereinrichtungen des Strömungskanals, wobei die Tropfenabscheiderlage (1, 2) mit der Tragkonstruktion über Steckverbindungen verbunden ist, indem Endwände (3, 4) der Tropfenabscheiderlage (1, 2) durch Steckverbindungen mit Halteplatten (8) der Tragkonstruktion verbunden sind, die sich an den Rändern des Strömungskanals bzw. Trägereinrichtungen desselben oder an einem Tragstab (9) der Tragkonstruktion abstützen, und wobei die Tropfenabscheiderlage (1, 2) parallel zu den Endwänden (3, 4) verlaufende Zwischenwände 5, 6) aufweist, die über Steckverbindungen mit der Tragkonstruktion verbunden sind, wobei die Enwände (3, 4) und die Zwischenwände (5, 6) auf die Halteplatten (8) der Tragkonstruktion unter Erzeugung eines lösbaren Klemmeingriffes aufgesteckt sind.

2. Tropfenabscheider nach Anspruch 1, **dadurch gekennzeichnet, dass** über die Steckverbindungen eine zusätzliche Verrastung bzw. Verriegelung stattfindet.

3. Tropfenabscheider nach Anspruch 1 oder 2, **dadurch gekennzeichnet, dass** die Tragkonstruktion mit den Endwänden (3, 4) und Zwischenwänden (5, 6) verbundene Halteplatten (8) und hiermit über Steckverbindungen verbundene Stegplatten (10) umfasst.

4. Tropfenabscheider nach einem der vorangehenden Ansprüche, **dadurch gekennzeichnet, dass** er eine horizontale, eine durchgehend einseitig geneigte oder eine dachförmig oder V-förmig ausgebildete Tropfenabscheiderlage (1, 2) umfasst.

5. Tropfenabscheider nach einem der vorangehenden Ansprüche, **dadurch gekennzeichnet, dass** er mehrere in Strömungsrichtung nacheinander angeordnete Tropfenabscheiderlagen (1, 2) aufweist.

6. Tropfenabscheider nach Anspruch 5, **dadurch gekennzeichnet, dass** die mehreren Tropfenabscheiderlagen (1, 2) eine gemeinsame Tragkonstruktion aufweisen, wobei mindestens eine Tropfenabscheiderlage (2) über Steckverbindungen mit der Tragkonstruktion verbunden ist.

7. Tropfenabscheider nach Anspruch 6, **dadurch gekennzeichnet, dass** die gemeinsame Tragkonstruktion mit einer oberen Tropfenabscheiderlage (2) durch Steckverbindungen verbunden und mit einer unteren Tropfenabscheiderlage (1) verschraubt ist.

## Claims

1. A droplet separator for a vertical flow channel, in particular of a flue gas desulphurization system, comprising a droplet separator layer (1, 2) with a plurality of plate droplet separator profiles which are arranged parallel to one another and which are provided with end walls (3, 4) running transversely thereto, and a supporting structure for the droplet separator layer for mounting on the edges or carrier apparatuses of the flow channel, wherein the droplet separator layer (1, 2) is connected to the supporting structure via plug connections, by end walls (3, 4) of the droplet separator layer (1, 2) being connected by plug connections to retaining plates (8) of the supporting structure which are supported on the edges of the flow channel or, respectively, carrier apparatuses thereof or on a supporting bar (9) of the supporting structure, and wherein the droplet separator layer (1, 2) has intermediate walls (5, 6) which run parallel to the end walls (3, 4) and which are connected to the supporting structure via plug connections, wherein the end walls (3, 4) and the intermediate walls (5, 6) are plugged onto the retaining plates (8) of the supporting structure, generating a releasable clamping engagement.

2. The droplet separator according to claim 1, **characterized in that** an additional latching or, respectively, locking is carried out via the plug connections.

3. The droplet separator according to claim 1 or 2, **characterized in that** the supporting structure comprises retaining plates (8), which are connected to the end walls (3, 4) and intermediate walls (5, 6), and web plates (10) which are connected thereto via plug connections.

4. The droplet separator according to one of the preceding claims, **characterized in that** it comprises a horizontal droplet separator layer (1, 2) which is continuously inclined on one side or which is configured in a roof-shaped or V-shaped manner.

5. The droplet separator according to one of the preceding claims, **characterized in that** it has a plurality of droplet separator layers (1, 2) which are arranged in succession in the direction of flow.

6. The droplet separator according to claim 5, **characterized in that** the plurality of droplet separator layers (1, 2) have a common supporting structure, wherein at least one droplet separator layer (2) is connected to the supporting structure via plug connections.

7. The droplet separator according to claim 6, **characterized in that** the common supporting structure is connected to an upper droplet separator layer (2) by plug connections and is screwed to a lower droplet separator layer (1).

## Revendications

1. Séparateur de gouttes pour un canal d'écoulement vertical, en particulier d'une installation de désulfurisation des gaz de fumée, avec une couche de séparateur de gouttes (1, 2) comprenant une pluralité de profilés de séparateur de gouttes à lamelles disposés parallèlement les uns aux autres, lesquels sont pourvus de parois terminales (3, 4) s'étendant transversalement à ceux-ci, et une structure de support pour la couche de séparateur de gouttes, destinée au montage sur les bords du canal d'écoulement ou sur des dispositifs de support de celui-ci, dans lequel la couche de séparateur de gouttes (1, 2) est reliée à la structure de support par des liaisons par enfichage, où des parois terminales (3, 4) de la couche de séparateur de gouttes (1, 2) sont reliées par des liaisons par enfichage à des plaques de maintien (8) de la structure de support, lesquelles s'appuient sur les bords du canal d'écoulement ou sur les dispositifs de support de celui-ci ou sur une barre de support (9) de la structure de support, et dans lequel la couche de séparateur de gouttes (1, 2) présente des parois intermédiaires (5, 6) s'étendant parallèlement aux parois terminales (3, 4), lesquelles sont reliées à la structure de support par des liaisons par enfichage, dans lequel les parois terminales (3, 4) et les parois intermédiaires (5, 6) sont enfoncées sur les plaques de maintien (8) de la structure de support en produisant un engagement par serrage amovible.

2. Séparateur de gouttes selon la revendication 1, **caractérisé en ce que** les liaisons par enfichage permettent d'obtenir un encliquetage ou un verrouillage supplémentaire.

3. Séparateur de gouttes selon la revendication 1 ou 2, **caractérisé en ce que** la structure de support comporte des plaques de maintien (8) reliées aux parois terminales (3, 4) et aux parois intermédiaires (5, 6) ainsi que des plaques de traverse (10) reliées à celles-ci par des liaisons par enfichage.

4. Séparateur de gouttes selon l'une des revendications précédentes, **caractérisé en ce qu'**il comporte une couche de séparateur de gouttes (1, 2) horizontale, inclinée en continu vers un côté ou conçue en forme de toit ou en forme de V.

5. Séparateur de gouttes selon l'une des revendications précédentes, **caractérisé en ce qu'**il présente plusieurs couches de séparateur de gouttes (1, 2) disposées successivement dans la direction d'écoulement.

6. Séparateur de gouttes selon la revendication 5, **caractérisé en ce que** les plusieurs couches de séparateur de gouttes (1, 2) présentent une structure de support commune, dans lequel au moins une couche de séparateur de gouttes (2) est reliée à la structure de support par des liaisons par enfichage.

7. Séparateur de gouttes selon la revendication 6, **caractérisé en ce que** la structure de support commune est reliée à une couche de séparateur de gouttes supérieure (2) par des liaisons par enfichage et vissée avec une couche de séparateur de gouttes inférieure (1).
